(19) Europäisches Patentamt

European Patent Office

Office européen des brevets

(11) **EP 1 681 886 A1**

(12) **EUROPÄISCHE PATENTANMELDUNG**

(43) Veröffentlichungstag:
**19.07.2006 Patentblatt 2006/29**

(51) Int Cl.:
***H04Q 7/36*** *(2006.01)*

(21) Anmeldenummer: 05000847.3

(22) Anmeldetag: **17.01.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(71) Anmelder: **SIEMENS AKTIENGESELLSCHAFT 80333 München (DE)**

(72) Erfinder: **Lott, Matthias 82061 Neuried (DE)**

(54) **Verfahren zum Ändern einer räumlichen Ausdehnung wenigstens eines Funkempfangsbereichs einer Funkstation und Funkstation**

(57) Bei einem Verfahren zum Ändern einer räumlichen Ausdehnung wenigstens eines Funkempfangsbereichs (A, B, C) einer Funkstation (BS) werden in dem wenigstens einen Funkempfangsbereich (A, B, C) auf einem Kanal (RACH1, RACH2, RACH3) per Zufallszugriff von Teilnehmerstationen (MS1, MS2, MS3, MS4, MS5, MS6, MS8, MS9) gesendete Daten empfangen. Erfindungsgemäß wird die räumliche Ausdehnung des wenigstens einen Funkempfangsbereichs (A, B, C) in Abhängigkeit von wenigstens einem Maß für eine Kollisionswahrscheinlichkeit von auf dem Kanal (RACH1, RACH2, RACH3) erfolgenden Zufallszugriffen geändert.

FIG 1

EP 1 681 886 A1

Printed by Jouve, 75001 PARIS (FR)

**Beschreibung**

Verfahren zum Ändern einer räumlichen Ausdehnung wenigstens eines Funkempfangsbereichs einer Funkstation sowie Funkstation

Die Erfindung betrifft ein Verfahren zum Ändern einer räumlichen Ausdehnung wenigstens eines Funkempfangsbereichs einer Funkstation sowie eine entsprechende Funkstation.

Eine wesentliche Komponente bei der Entwicklung einer neuen Luftschnittstelle für zukünftige Funkkommunikationssysteme ist der Zufallszugriff (random access). Jede Teilnehmerstation, die erstmalig eine Verbindung in einem Funkkommunikationssystem wünscht, muss sich registrieren und gegenüber dem Funkkommunikationssystem identifizieren. Dies wird im Allgemeinen mittels Zufallszugriff realisiert. Auch bereits registrierte Teilnehmerstationen benötigen einen Zufallszugriff zur Zuteilung von Übertragungsressourcen. Insbesondere bei einer zentral organisierten Zugriffskontrolle auf Übertragungsressourcen verwenden Teilnehmerstationen einen Zufallszugriff, um Übertragungsressourcen von einem Zugangspunkt (access point), beispielsweise einer Basisstation, für Übertragungen in Aufwärtsrichtung (uplink), d.h. für Datenübertragungen von der Teilnehmerstation zu dem Zugangspunkt, anzufragen.

Ein sich immer mehr durchsetzender Trend in der mobilen Datenübertragung ist die paketorientierte Datenübertragung (packet switching). Die paketvermittelte Datenübertragung ersetzt zunehmend die leitungsvermittelte Übertragung (circuit switching). Mit einem steigenden Prozentsatz von Diensten mit variabler Datenrate und aufgrund einer Datenübertragung in Form von Funkblöcken (engl.: bursts) müssen Übertragungsressourcen auf der Luftschnittstelle auf Anfrage und in sehr flexibler Art und Weise zugewiesen werden.

In zukünftigen drahtlosen Übertragungssystemen soll einerseits statistisches Multiplexing der zu übertragenden Daten erfolgen sowie eine Reservierung von Übertragungskapazität nur dann vorgenommen werden, wenn Daten zur Übertragung vorliegen während andererseits sehr geringe Verzögerungszeiten erreicht werden sollen, die jedoch eine schnelle und fast ohne Zeitverzögerung erfolgende Reservierung von Übertragungsressourcen erfordern. Um die genannten Anforderungen möglichst gut zu erfüllen wird ein schneller und höchst effizienter Zufallszugriff für Übertragungen in Aufwärtsrichtung benötigt.

Neben Verbindungsaufbausignalen können auch Nutzdaten durch einen Zufallszugriff übertragen werden. Das bekanntest Protokoll ist das ALOHA bzw. slotted ALOHA Protokoll. Bei diesem Protokoll übertragen Teilnehmerstationen zufällig ihre Nutzdaten in einem gemeinsam genutzten Kanal, so dass auch hier die Effizienz des Zufallszugriffs von großer Bedeutung ist.

Der Erfindung liegt daher die Aufgabe zugrunde, ein vorteilhaftes Verfahren sowie eine Funkstation anzugeben, mittels derer ein verbesserter Zufallszugriff realisiert werden kann, der eine flexible und schnelle Zuweisung von Übertragungsressourcen bzw. eine schnelle und effiziente Datenübertragung für eine Vielzahl von Teilnehmerstationen in zukünftigen Funkkommunikationssystemen ermöglicht.

Diese Aufgabe wird mit dem Verfahren sowie der Funkstation gemäß den unabhängigen Ansprüchen gelöst.

Vorteilhafte Ausgestaltungen und Weiterbildungen der Erfindung sind Gegenstand der abhängigen Ansprüche.

Bei dem erfindungsgemäßen Verfahren zum Ändern einer räumlichen Ausdehnung wenigstens eines Funkempfangsbereichs einer Funkstation werden in dem wenigstens einen Funkempfangsbereich auf einem Kanal per Zufallszugriff von Teilnehmerstationen gesendete Daten empfangen. Erfindungsgemäß wird die räumliche Ausdehnung des wenigstens einen Funkempfangsbereich in Abhängigkeit von wenigstens einem Maß für eine Kollisionswahrscheinlichkeit von auf dem Kanal erfolgenden Zufallszugriffen geändert. Anhand des Maßes für die Kollisionswahrscheinlichkeit kann beispielsweise ein Wert für die Kollisionswahrscheinlichkeit abgeschätzt werden. Die Ausdehnung des Funkempfangsbereichs kann dann durch die Erfindung so geändert werden, dass die Kollisionswahrscheinlichkeit von Zufallszugriffen in dem Funkempfangsbereich je nach Bedarf entweder verringert oder vergrößert wird.

Bei den per Zufallszugriff von Teilnehmerstationen gesendeten und von der Funkstation empfangenen Daten handelt es sich beispielsweise um Verbindungsaufbausignale, die beispielsweise auf einem Zufallszugriffskanal (RACH: Random Access Channel) empfangen werden, oder um beispielsweise mittels des ALOHA Protokolls gesendete Nutzdaten.

Vorteilhafterweise wird als Maß für eine Kollisionswahrscheinlichkeit die Anzahl sich in dem Funkempfangsbereich befindender Teilnehmerstationen oder die Anzahl sich in dem Funkempfangsbereich ohne aktive Verbindung befindender Teilnehmerstationen und/oder die Anzahl innerhalb des Zeitintervalls in dem Funkempfangsbereich empfangener Zufallszugriffe und/oder die Art und/oder eine Priorität eines per Zufallszugriff verwendeten oder angeforderten Dienstes verwendet.

Je größer die Anzahl sich in dem Funkempfangsbereich befindender Teilnehmerstationen oder die Anzahl sich in dem Funkempfangsbereich ohne aktive Verbindung befindender Teilnehmerstationen ist und/oder je größer die Anzahl während des Zeitintervalls im Funkempfangsbereich empfangener Zufallszugriffe ist, desto größer ist die Wahrscheinlichkeit dafür, dass Zufallszugriffe kollidieren bzw. desto häufiger kollidieren Zufallszugriffe tatsächlich. Die Erfindung ermöglicht, dass beispielsweise durch eine Verringerung der räumlichen Ausdehnung des wenigstens einen Funkempfangsbereich die Anzahl der sich im Funkempfangsbereich befindenden Teilnehmerstationen reduziert wird. Daraus resultiert üblicherweise auch eine Reduzierung der Anzahl der während eines Zeitintervalls in dem Funkempfangsbereich empfangenen Zufallszugriffe. Auf diese Weise lässt sich die Wahrscheinlichkeit für Kollisionen der Zufallszugriffe bzw. die tatsächlich auftretende Anzahl von Kollisionen der Zufallszugriffe reduzieren.

Weiterhin kann je nach Art des Dienstes eine unterschiedliche Zugriffshäufigkeit (Zufallszugriffe pro Zeiteinheit) angenommen werden. Werden in dem Funkempfangsbereich Daten wenigstens eines Dienstes an die Funkstation übertragen, der eine große Wiederholrate von Zufallszugriffen erfordert (z.B. Videodaten mit hohen Übertragungsraten), ergibt sich für diese Daten eine höhere Kollisionswahrscheinlichkeit als für Daten von Diensten, die beispielsweise HTTP verwenden. Für einen Dienst mit Videodaten mit hohen Übertragungsraten kann durch die Erfindung der Funkempfangsbereich derart geändert werden, dass beispielsweise eine möglichst geringe Kollisionswahrscheinlichkeit erreicht wird. Ein Dienst mit hoher Priorität (z.B. ein zeitkritischer Dienst für Sprachdaten) erfordert große Zufallszugriffsraten, um geringe Verzögerungszeiten für eine Datenübertragung zu erreichen. Daraus resultiert jedoch eine, beispielsweise von der Anzahl in dem Funkempfangsbereich befindlicher Teilnehmerstationen abhängige, gegenüber Diensten mit niedriger Priorität (d.h. mit geringen Zufallszugriffsraten) erhöhte Kollisionswahrscheinlichkeit für Zufallszugriffe. Treten vermehrt Kollisionen auf, erhöht sich die Verzögerungszeit und der Sprachdienst kann nicht mehr ungestört empfangen werden. Die Erfindung ermöglicht eine für Dienste mit hoher Priorität vorgesehene Übertragungsqualität sicherzustellen, in dem die Ausdehnung des Funkempfangsbereichs derart geändert wird, dass die Kollisionswahrscheinlichkeit verringert wird. Hierzu wird beispielsweise zusätzlich zur Priorität des Dienstes die Anzahl von Teilnehmerstationen in dem Funkempfangsbereich berücksichtigt.

Unter einer Kollision von Zufallszugriffen ist der gleichzeitige Empfang von Zufallszugriffen unterschiedlicher Teilnehmerstationen durch die Funkstation zu verstehen. Eine Kollision von Verbindungsaufbausignalen führt beispielsweise dazu, dass keiner der betroffenen Teilnehmerstationen Übertragungsressourcen zugewiesen werden können. Die betroffenen Teilnehmerstationen müssen jeweils solange erneut Verbindungsaufbausignale senden, bis die jeweiligen Verbindungsaufbausignale ohne Kollision empfangen werden.

Vorteilhafterweise werden auf dem Kanal unterschiedliche Zeitlagen und/oder unterschiedliche Codes zur Übertragung von Zufallszugriffen verwendet. Dadurch wird ermöglicht, dass während eines Empfangszyklus auf dem Kanal Zufallszugriffe von mehreren Teilnehmerstationen empfangen werden können, da einzelne Zufallszugriffe aufgrund ihrer Zeitlage und/oder aufgrund ihres Codes unterschieden und somit von der Funkstation empfangen werden können. Wünscht eine Teilnehmerstation beispielsweise eine Verbindung, d.h. Übertragungsressourcen, so wählt sie zufällig eine Zeitlage und/oder einen Code für ein Verbindungsaufbausignal aus. Je mehr Zeitlagen und/oder Codes während eines Empfangszyklus auf dem Kanal für Zufallszugriffe zur Verfügung stehen, umso geringer ist somit bei gleicher Anzahl von Teilnehmerstationen die Wahrscheinlichkeit für Kollisionen von Zufallszugriffen.

Es ist von Vorteil, wenn die räumliche Ausdehnung des Funkempfangsbereichs verringert wird, falls das Maß für eine Kollisionswahrscheinlichkeit einen ersten Grenzwert überschreitet.

Als erster Grenzwert kann beispielsweise die Anzahl der während eines Empfangszyklus auf dem Kanal in Form von Zeitlagen und/oder Codes zur Verfügung stehenden Übertragungsressourcen verwendet werden. Dadurch kann die räumliche Ausdehnung des Funkempfangsbereichs so gewählt werden, dass theoretisch alle in den Funkempfangsbereich befindlichen Teilnehmerstationen während eines Empfangszyklus auf dem Kanal einen Zufallszugriff durchführen können, ohne dass es zu einer Kollision kommt. Ist die räumliche Ausdehnung des Funkempfangsbereichs so groß, dass die entsprechende Anzahl den ersten Grenzwert überschreitet, können Kollisionen nur dann vermieden werden, wenn nicht alle Teilnehmerstationen während eines Empfangszyklus einen Zufallszugriff durchführen.

Weiterhin kann es vorkommen, dass die während eines Empfangszyklus auf dem Kanal beispielsweise in Form von Zeitlagen und/oder Codes zur Verfügung stehende Übertragungskapazität nicht voll ausgeschöpft wird. Dies tritt beispielsweise dann auf, wenn sich eine geringe Anzahl von Teilnehmerstationen in dem Funkempfangsbereich befindet bzw. wenn nur eine geringe Anzahl von Zufallszugriffen während des Zeitintervalls in dem Funkempfangsbereich empfangen wird. Es ist daher von Vorteil, wenn die räumliche Ausdehnung des Funkempfangsbereichs vergrößert wird, falls das Maß für eine Kollisionswahrscheinlichkeit einen zweiten Grenzwert unterschreitet.

Der erste und der zweite Grenzwert können selbstverständlich den gleichen Wert aufweisen oder unterschiedliche Werte haben. Beispielsweise kann der zweite Grenzwert kleiner als der erste Grenzwert gewählt werden. Dadurch wird ermöglicht, die räumliche Ausdehnung des Funkempfangsbereichs unverändert zu lassen, sofern beispielsweise die Anzahl sich in dem Funkempfangsbereich befindender Teilnehmerstationen oder beispielsweise die Anzahl innerhalb des Zeitintervalls in dem Funkempfangsbereich empfangener Verbindungsaufbausignale einen Wert aufweisen, der zwischen dem ersten und dem zweiten Grenzwert liegt.

Eine große Anzahl von empfangenen Zufallszugriffen liegt meist dann vor, wenn eine große Anzahl von Teilnehmerstationen in dem Funkempfangsbereich lokalisiert ist. Gleichzeitig liegt dann auch eine hohe Wahrscheinlichkeit für das Auftreten von Kollisionen während eines Empfangszyklus auf dem Kanal für den zufälligen Zugriff vor. Die Anzahl von Teilnehmerstationen in dem Funkempfangsbereich ist somit ein Maß für die Anzahl der auftretenden Kollisionen und umgekehrt. In einer Weiterbildung der Erfindung wird daher mit Vorteil von der Anzahl innerhalb des Zeitintervalls in dem Funkempfangsbereich empfangener Zufallszugriffe nur die Anzahl der Kollisionen von Zufallszugriffen berücksichtigt. Nur wenn es tatsächlich zu einer beispielsweise durch den ersten oder zweiten Grenzwert festgelegten Anzahl von Kollisionen von Zufallszugriffen kommt, wird die räumliche Ausdehnung des Funkempfangsbereichs verringert bzw. vergrößert.

Besonders vorteilhaft lässt sich die Erfindung anwenden, wenn als Funkempfangsbereich ein Empfangssektor eine Richtantennenvorrichtung der Funkstation verwendet wird.

In einem Funkkommunikationssystem versorgt eine Funkstation meist mehrere Funkempfangsbereiche die beispielsweise durch Empfangssektoren einer Richtantennenvorrichtung der Funkstation realisiert werden. Weiterhin sind in einem Funkkommunikationssystem auch weitere Funkstationen vorhanden, die ebenfalls Funkempfangsbereiche aufweisen. Es ist daher von Vorteil, wenn in einer Gruppe von Funkempfangsbereichen der Funkstationen oder in einer Gruppe von Funkempfangsbereichen weiterer Funkstationen in jedem Funkempfangsbereich auf einem Kanal per Zufallszugriff von Teilnehmerstationen gesendete Daten empfangen werden und wenn die räumliche Ausdehnung der Funkempfangsbereiche in Abhängigkeit von einem jeweiligen Maß für eine Kollisionswahrscheinlichkeit von auf dem entsprechenden Kanal erfolgenden Zufallszugriffen geändert wird. Auf diese Weise kann bei der Änderung der räumlichen Ausdehnung eines Funkbereichs die Änderung weiterer Funkempfangsbereiche berücksichtigt werden. Hinsichtlich der Gruppe von Funkempfangsbereichen kann somit eine Änderung der räumlichen Ausdehnung der Funkempfangsbereiche gemeinsam angepasst werden und somit im Idealfall optimiert werden.

Mit Vorteil können die räumlichen Ausdehnungen der Funkempfangsbereiche so geändert werden, dass eine für alle Funkempfangsbereiche der Gruppe gemeinsam betrachtete Kollisionswahrscheinlichkeit von Zufallszugriffen verringert wird.

Es ist günstig, wenn die räumlichen Ausdehnungen der Funkempfangsbereiche so geändert werden, dass benachbarte Funkbereiche direkt aneinandergrenzen oder überlappen. Auf diese Weise kann bei der erfindungsgemäßen Änderung der räumlichen Ausdehnungen der Funkempfangsbereiche eine flächendeckende Versorgung der Teilnehmerstationen sichergestellt werden.

Es ist zweckmäßig, wenn in wenigstens zwei benachbarten Funkempfangsbereichen gleiche Zeitlagen und/ oder gleiche Codes für Zufallszugriffe verwendet werden. Dadurch kann vermieden werden, dass einer Teilnehmerstation, die aufgrund einer Änderung der räumlichen Ausdehnung eines ersten Funkempfangsbereichs von dem ersten Funkempfangsbereich in einen zweiten Funkempfangsbereich gerät, für den zweiten Funkempfangsbereich gültige Zeitlagen und/oder Codes signalisiert werden müssen. Der Signalisierungsaufwand kann daher reduziert werden.

Die erfindungsgemäße Funkstation weist alle Merkmale auf, die zur Durchführung des erfindungsgemäßen Verfahrens benötigt werden. Insbesondere können entsprechende Mittel zur Durchführung der einzelnen Verfahrensschritte oder Verfahrensvarianten vorgesehen sein.

Die Erfindung wird im Folgenden anhand von in den Figuren dargestellten Ausführungsbeispielen näher erläutert. Es zeigen:

Figur 1     eine schematische Darstellung einer Funkstation mit Funkempfangsbereichen deren räumliche Ausdehnungen unter Anwendung des erfindungsgemäßen Verfahrens geändert werden, und

Figur 2     eine schematische Darstellung eines Übertragungsrahmens mit einem Empfangszyklus auf einem Kanal für den zufälligen Zugriff.

Gleiche Bezugszeichen in den Figuren bezeichnen gleiche Gegenstände.

Eine Teilnehmerstation ist beispielsweise ein Mobilfunkendgerät, insbesondere ein Mobiltelefon oder auch eine ortsbewegliche oder ortsfeste Vorrichtung zur Übertragung von Bild-und/oder Tondaten, zum Fax-, Short-Message-Service SMS-, Multimedia-Messaging-Service MMS- und/oder Email-Versand und/oder zum Internetzugang.

Eine Funkstation ist eine netzseitige Station, die von einer Teilnehmerstation Nutz- und/oder Signalisierungsdaten empfängt und/oder Nutz- und/oder Signalisierungsdaten an die Teilnehmerstation sendet. Eine Funkstation ist über netzseitige Einrichtungen mit einem Kernnetz verbunden, über das Verbindungen in andere Funkkommunikationssysteme oder in andere Datennetze erfolgen. Unter einem Datennetz ist beispielsweise das Internet oder ein Festnetz mit beispielsweise leitungsvermittelten oder paketvermittelten Verbindungen für zum Beispiel Sprache und/oder Daten zu verstehen.

Nachfolgend wird als Funkstation eine Basisstation betrachtet, ohne jedoch damit zum Ausdruck bringen zu wollen, dass die Erfindung hierauf beschränkt sein soll.

Die Erfindung kann vorteilhaft in beliebigen Funkkommunikationssystemen verwendet werden. Unter Funkkommunikationssystemen sind Systeme zu verstehen, in denen eine Datenübertragung zwischen Funkstationen und Teilnehmerstationen über eine Luftschnittstelle erfolgt. Die Datenübertragung kann sowohl bidirektional als auch unidirektional erfolgen. Funkkommunikationssysteme sind insbesondere beliebige Mobilfunksysteme beispielsweise nach dem GSM- (Global System for Mobile Communications) oder dem UMTS- (Universal Mobile Telecommuniations System) Standard. Auch für künftige Mobilfunksysteme, beispielsweise der vierten Generation, sowie Adhoc-Netze sollen unter Funkkommunikationssysteme verstanden werden. Funkkommunikationssysteme sind beispielsweise auch drahtlose lokale Netze (WLAN: Wireless Local Area Network) gemäß den Standards IEEE (Institute of Electrical and Electronics Engineers) 802.11a bis i, HiperLAN 1 und HiperLAN 2 (HiperLAN: High Performance Radio Local Area Network) sowie Bluetooth-Netze.

Im Folgenden wird die Erfindung am Beispiel eines Mobilfunksystems nach dem GSM-Standard beschrieben, ohne jedoch damit zum Ausdruck zu bringen wollen, dass die Erfindung hierauf beschränkt sein soll.

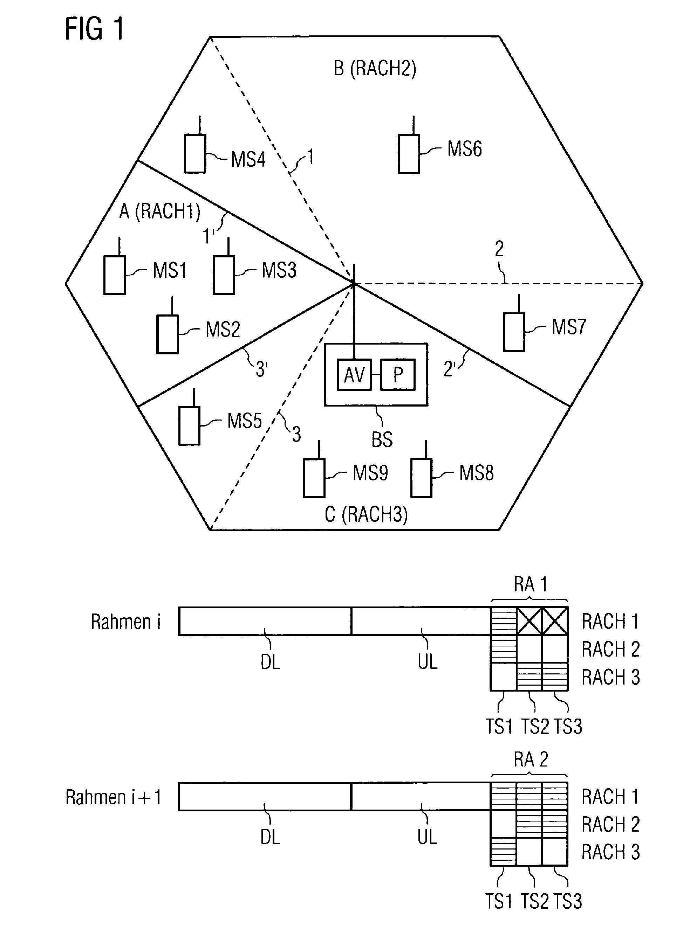

Figur 1 zeigt schematisch eine Basisstation BS mit einem sechseckigen Empfangsbereich, der durch entsprechendes Ansteuern einer Richtantennenvorrichtung AV durch ein Steuermittel P in drei Funkempfangsbereiche A, B, C unterteilt wird. In dem ersten Funkempfangsbereich A empfängt die Basisstation BS auf einem ersten Kanal RACH1 für einen zufälligen Zugriff Verbindungsaufbausignale von einer ersten, zweiten, dritten, vierten und fünften Teilnehmerstation MS1, MS2, MS3, MS4, MS5 während eines ersten Empfangszyklus RA1 innerhalb eines ersten Übertragungsrahmens *Rahmen i*. Der erste Übertragungsrahmen *Rahmen i* besteht neben dem ersten Empfangszyklus RA1 aus einem Bereich für die Abwärtsübertragung DL von der Basisstation BS zu den Teilnehmerstationen und aus einem Bereich für die Aufwärtsübertragung UL von den Teilnehmerstationen zu der Basisstation BS.

Während des ersten Übertragungsrahmens *Rahmen* i empfängt die Basisstation BS in dem zweiten Funkempfangsbereich B auf einem zweiten Kanal RACH2 für einen zufälligen Zugriff ein Verbindungsaufbausignal von einer sechsten Teilnehmerstation MS6. Ebenfalls während des ersten Empfangszyklus RA1 in dem ersten Übertragungsrahmen *Rahmen i* empfängt die Basisstation BS in dem dritten Funkempfangsbereich C auf einem dritten Kanal RACH3 für einen zufälligen Zugriff Verbindungsaufbausignale von einer achten Teilnehmerstation MS8 und einer neunten Teilnehmerstation MS9. Von einer siebenten Teilnehmerstation MS7, die sich ebenfalls in dem dritten Funkempfangsbereich C befindet, empfängt die Basisstation BS keine Verbindungsaufbausignale auf dem dritten Kanal RACH3 für einen zufälligen Zugriff, da die siebente Teilnehmerstation MS7 bereits eine Verbindung mit der Basisstation BS unterhält. Die räumliche Ausdehnung der ersten, zweiten und dritten Funkempfangsbereiche A, B, C während des ersten Empfangszyklus RA1 innerhalb des ersten Übertragungsrahmens *Rahmens i* ist durch gestrichelte Linien in der Figur gekennzeichnet. Dabei wird der erste Funkempfangsbereich A von den gestrichelten Linien 1 und 3, der zweite Funkempfangsbereich B von den gestrichelten Linien 1 und 2 und der dritte Funkempfangsbereich C von den gestrichelten Linien 2 und 3 begrenzt.

In dem ersten, zweiten und dritten Kanal RACH1, RACH2, RACH3 für den zufälligen Zugriff stehen während jeweiliger Empfangszyklen, die in diesem Ausführungsbeispiel am Ende eines jeweiligen Übertragungsrahmens liegen, jeweils drei Zeitschlitze zur Übertragung von Verbindungsaufbausignalen zur Verfügung. Selbstverständlich können Empfangszyklen für Verbindungsaufbausignale auch am Anfang eines Übertragungsrahmens oder zwischen dem Bereich für die Abwärtsübertragung DL und dem Bereich für die Aufwärtsübertragung UL liegen. Können Verbindungsaufbausignale durch Verwendung eines oder mehrerer Codes, z. B. Spreizcodes oder Verwürflungscodes, von anderen zu übertragenden Signalen unterschieden werden, ist es möglich, Verbindungsaufbausignale auch zeitgleich mit Signalen in Aufwärts- oder Abwärtsrichtung zu senden.

Anstelle von Verbindungsaufbausignalen können selbstverständlich auch Nutzdaten per Zufallszugriff, beispielsweise mittels des ALOHA Protokolls, auf dem ersten, zweiten und dritten Kanal RACH1, RACH2, RACH3 für den zufälligen Zugriff oder auf anderen Kanälen mit Zufallszugriff gesendet werden.

Im ersten Funkempfangsbereich A sendet die erste Teilnehmerstation MS1 ein Verbindungsaufbausignal in einem ersten Zeitschlitz TS1. Dieses Verbindungsaufbausignal ist erfolgreich und kollidiert mit keinem anderen Verbindungsaufbausignal. Ebenfalls im ersten Funkempfangsbereich A senden die zweite und die fünfte Teilnehmerstation MS2, MS5 jeweils ein Verbindungsaufbausignal in einem zweiten Zeitschlitz TS2 und die dritte Teilnehmerstation und die vierte Teilnehmerstation MS3, MS4 senden jeweils ein Verbindungsaufbausignal in einem dritten Zeitschlitz TS3. Daher kommt es zu einer Kollision der jeweiligen Verbindungsaufbausignale in den zweiten und dritten Zeitschlitzen TS2, TS3 des ersten Empfangszyklus RA1.

Eine Kollision von Verbindungsaufbausignalen in einem Zeitschlitz eines Empfangszyklus ist in Figur 1 durch ein Kreuz in dem entsprechenden Zeitschlitz dargstellt, während ein erfolgreich empfangenes Verbindungsaufbausignal durch eine horizontale Schraffur des entsprechenden Zeitschlitzes dargestellt ist. Ein Zeitschlitz ohne Füllmuster zeigt an, dass in diesem Zeitschlitz kein Verbindungsaufbausignal empfangen wurde.

In dem zweiten Funkempfangsbereich B befindet sich während des ersten Empfangszyklus RA1 nur die Teilnehmerstation MS6. Diese sendet im ersten Zeitschlitz TS1 ein Verbindungsaufbausignal, das erfolgreich empfangen wird. Im zweiten und dritten Zeitschlitz TS2, TS3 des ersten Empfangszyklus RA1 werden im zweiten Funkempfangsbereich keine Verbindungsaufbausignale empfangen.

In dem dritten Funkempfangsbereich C wird während des ersten Zeitschlitzes TS1 des ersten Empfangszyklus RA1 kein Verbindungsaufbausignal gesendet. Die achte Teilnehmerstation MS8 sendet ein Verbindungsaufbausignal während des zweiten Zeitschlitzes TS2 und die neunte Teilnehmerstation MS9 sendet ein Verbindungsaufbausignal während des dritten Zeitschlitzes TS3. Diese Verbindungsaufbausignale kollidieren mit keinen anderen Verbindungsaufbausignalen. Die siebte Teilnehmerstation MS7 unterhält bereits eine Verbindung mit der Basisstation BS und sendet kein Verbindungsaufbausignal.

In einem bevorzugten Ausführungsbeispiel der Erfindung ermittelt die Basisstation BS die Anzahl der Kollisionen von Verbindungsaufbausignalen im ersten Funkempfangsbereich A. Die ermittelte Anzahl ist ein Maß für eine Kollisionswahrscheinlichkeit von Verbindungsaufbausignalen, d.h. von Zufallszugriffen, im ersten Funkempfangsbereich A. In der Basisstation BS ist als Anzahl zulässiger Kollisionen eine Kollision als ein erster Grenzwert vorgegeben. Der erste Grenzwert wird im ersten Funkempfangsbereich A überschritten, da dort zwei Kollisionen aufgetreten sind. Aus diesem Grund wird die räumliche Ausdehnung des ersten Funkempfangsbereich A für einen nachfolgenden Empfang von Verbindungsaufbausignalen während eines zweiten Empfangszyklus RA2 innerhalb eines zweiten Übertragungsrahmens *Rahmen i+1* verringert. Die Änderung des ersten Funkempfangsbereich A erfolgt derart, dass der erste Funkempfangsbereich A nach der Änderung durch die durchgezogenen Linien 1' und 3' begrenzt wird. Es befindet sich dann nur noch die erste, zweite und dritte Teilnehmerstation MS1, MS2, MS3 in dem geänderten ersten Funkempfangsbereich A. Auf diese Weise wird die Kollisionswahrscheinlichkeit für Verbindungsaufbausignale im ersten Funkempfangsbereich A verringert.

Der zweite Übertragungsrahmen *Rahmen i+1* besteht ebenso wie der erste Übertragungsrahmen *Rahmen i* neben dem zweiten Empfangszyklus RA2 aus einem Bereich für die Abwärtsübertragung DL von der Basisstation BS zu den Teilnehmerstationen und aus einem Bereich für die Aufwärtsübertragung UL von den Teilnehmerstationen zu der Basisstation BS.

In diesem Ausführungsbeispiel sind der Basisstation BS die Anzahl sowie die geografische Lage der zum Zeitpunkt des ersten Übertragungsrahmens *Rahmen i* in dem ersten Funkempfangsbereich A befindlichen Teilnehmerstationen MS1, MS2, MS3, MS4, MS5 bekannt. Anzahl und geografische Lage der Teilnehmerstationen MS1, MS2, MS3, MS4, MS5 kennt die Funkstation BS beispielsweise aufgrund vorher bestehender Verbindungen, beispielsweise Paketdatenverbindungen, sowie aufgrund beispielsweise mittels GPS (GPS: Global Positioning System) ermittelter Positionen der Teilnehmerstationen MS1, MS2, MS3, MS4, MS5.

Der Basisstation BS ist weiterhin aufgrund der Beobachtung vorhergehender Verbindungen und aufgrund des Empfangs eines Verbindungsaufbausignals von der sechsten Teilnehmerstation MS6 in dem zweiten Funkempfangsbereich B bekannt, dass sich in dem zweiten Funkempfangsbereich B nur eine, nämlich die sechste Teilnehmerstation MS6 befindet. Da durch einen zweiten Grenzwert festgelegt ist, dass maximal drei Teilnehmerstationen in einem Funkempfangsbereich lokalisiert sein sollen, können in den zweiten Funkempfangsbereich B weitere Teilnehmerstationen aufgenommen werden. Dies erreicht die Basisstation BS dadurch, dass sie den zweiten Funkempfangsbereich B für den zweiten Empfangszyklus RA2 des zweiten Übertragungsrahmens *Rahmen i+1* vergrößert. Durch die Vergrößerung des zweiten Funkempfangsbereich B gelangen die vierte Teilnehmerstation MS4 von dem ursprünglichen ersten Funkempfangsbereich A in den nunmehr vergrößerten Funkempfangsbereich B, der jetzt von den durchgezogenen Linien 1' und 2' begrenzt wird. Ebenso gelangt die siebente Teilnehmerstation MS7 in den vergrößerten zweiten Funkempfangsbereich B. Dies ist insbesondere daher nicht störend für den Empfang von Verbindungsaufbausignalen, da die siebente Teilnehmerstation MS7 weiterhin die Verbindung mit der Basisstation BS aufrechterhält und somit auch während des zweiten Empfangszyklus RA2 voraussichtlich kein Verbindungsaufbausignal senden wird.

Die Basisstation BS ist so ausgebildet, dass sie Änderungen von Funkempfangsbereichen so durchführt, dass benachbarte Funkempfangsbereiche wie der erste, zweite und dritte Funkempfangsbereich A, B, C auch nach der Änderung einander grenzen bzw. überlappen. Aus diesem Grund ergibt sich die räumliche Ausdehnung des dritten Funkempfangsbereich C für den Empfang von Verbindungsaufbausignalen während des zweiten Empfangszyklus RA2 im zweiten Übertragungsrahmen *Rahmen i+1* durch die Verringerung des ersten Funkempfangsbereich A und die Vergrößerung des zweiten Funkempfangsbereichs B. Nach der Änderung der räumlichen Ausdehnungen der Funkempfangsbereiche A, B, C, liegt daher neben der achten und der neunten Teilnehmerstation MS8, MS9 auch die fünfte Teilnehmerstation MS5 in dem geänderten dritten Funkempfangsbereich C, der nun durch die durchgezogenen Linien 2' und 3' begrenzt wird.

Während des zweiten Übertragungsrahmens *Rahmen i+1* empfängt die Basisstation BS während des zweiten Empfangszyklus RA2 im geänderten ersten Funkempfangsbereich A ein erfolgreiches Verbindungsaufbausignal im ersten Zeitschlitz TS1 von der ersten Teilnehmerstation MS1, ein erfolgreiches Verbindungsaufbausignal im zweiten Zeitschlitz TS2 von der zweiten Teilnehmerstation MS2 und ein erfolgreiches Verbindungsaufbausignal von der dritten Teilnehmerstation MS3 im dritten Zeitschlitz TS3.

Im geänderten zweiten Funkempfangsbereich B empfängt die Basisstation BS im ersten Zeitschlitz TS1 kein Verbindungsaufbausignal, ein erfolgreiches Verbindungsaufbausignal von der vierten Teilnehmerstation MS4 im zweiten Zeitschlitz TS2 und ein erfolgreiches Verbindungsaufbausignal von der sechsten Teilnehmerstation MS6 im dritten Zeitschlitz TS3. Die sechste Teilnehmerstation MS6 hat bereits Übertragungsressourcen im zweiten Übertragungsrahmen zum beispielsweise paketvermittelten Datenübertragen. Die sechste Teilnehmerstation MS6 benötigt jedoch beispielsweise in einem dritten, nicht dargestellten Übertragungsrahmen weitere Übertragungsressourcen. Aus diesem Grund sendet die sechste Teilnehmerstation MS6 bereits während des zweiten Empfangszyklus RA2 erneut ein Verbindungsaufbausignal. Die siebte Teilnehmerstation MS7 unterhält weiterhin ihre Verbindung mit der Basisstation BS und sendet daher kein Verbindungsaufbausignal.

In dem dritten Funkempfangsbereich C empfängt die Basisstation BS in dem ersten Zeitschlitz TS1 ein Verbindungsaufbausignal erfolgreich von der fünften Teilnehmerstation MS5. Im zweiten und dritten Zeitschlitz TS2, TS3 empfängt die Basisstation BS kein Verbindungsaufbausignal in dem dritten Funkempfangsbereich C. Die achte und die neunte Teilnehmerstation MS8 und MS9 unterhalten weiterhin ihre auf Grund der während des ersten Empfangszyklus RA1 gesendeten Verbindungsaufbausignale aufgebauten Verbindungen und benötigen daher keine weiteren Verbindungsaufbausignale.

Die Basisstation BS überwacht nun weiterhin während nachfolgender Übertragungsrahmen beziehungsweise der darin enthaltenen Empfangszyklen auf den Kanälen RACH1, RACH2, RACH3 für einen zufälligen Zugriff, die Anzahl der dort auftretenden Kollisionen von Verbindungsaufbausignalen oder die Anzahl der insgesamt auftretenden Verbindungsaufbausignale oder die Anzahl der in den entsprechenden Funkempfangsbereich vorhandenen Teilnehmerstationen oder die Anzahl der in den entsprechenden Funkempfangsbereich vorhandenen Teilnehmerstationen, die keine aktive Verbindung unterhalten. In Abhängigkeit von der entsprechenden Anzahl werden auch für nachfolgende Übertragungsrahmen die räumlichen Ausdehnungen der Funkempfangsbereich A, B, C angepasst. Auf diese Weise kann sowohl der aktuelle Bedarf von Teilnehmerstationen für Verbindungen, d.h. zum Senden von Verbindungsaufbausignalen, sowie die Bewegung von Teilnehmerstationen von einem Funkempfangsbereich in einen anderen Funkempfangsbereich und die damit verbundene Veränderung der vorhandenen Anzahl von Teilnehmerstationen mit oder ohne aktive Verbindung beziehungsweise der Anzahl der auftretenden Kollisionen beziehungsweise der Anzahl der insgesamt auftretenden Verbindungsaufbausignale in den Funkempfangsbereichen zur Festlegung der räumlichen Ausdehnungen der Funkempfangsbereiche A, B, C berücksichtigt werden.

Alternativ oder zusätzlich können auch die Art und/oder Priorität von Diensten von Teilnehmerstationen in Funkempfangsbereichen als Maß für eine Kollisionswahrscheinlichkeit, d.h. als Information über die Zugriffshäufigkeit auf den entsprechenden Dienst verwendet und zur Änderung der Ausdehnung der Funkempfangsbereiche verwendet werden.

Nutzt eine erste Teilnehmerstation einen Dienst, der beispielsweise ein Video mit hoher Datenrate in Form von Funkblöcken (bursts) per Zufallszugriff an die Basisstation überträgt, ist eine hohe Anzahl von Zufallszugriffen erforderlich. Diese Teilnehmerstation trägt daher mehr Verkehr zum Zufallszugriff bei als eine zweite Teilnehmerstation mit einer vergleichsweise geringen Anzahl von Zufallszugriffen, wie dies z.B. bei der Nutzung eines Dienstes, der HTTP verwendet, der Fall ist. Befindet sich die erste Teilnehmerstation in einem Funkempfangsbereich mit vielen anderen Teilnehmerstationen, so liegt eine hohe Wahrscheinlichkeit für Kollisionen von Zufallszugriffen vor. Damit der Dienst möglichst ungestört empfangen werden kann, wird der Funkempfangsbereich daher in seiner Ausdehnung verringert, so dass weiniger Teilnehmerstationen in dem Funkempfangsbereich vorhanden sind.

Für einen zeitkritischen Dienst (z.B. Sprachedaten) kann eine hohe Priorität als Maß für eine hohe Kollisionswahrscheinlichkeit festgelegt werden. Überträgt die erste Teilnehmerstation beispielsweise einen zeitkritischen Dienst, wird sie wie im letzten Absatz beschrieben behandelt, d.h. der Funkempfangsbereich wird in seiner Ausdehnung verringert. Daraus resultiert auch eine verringerte Kollisionswahrscheinlichkeit.

Die Richtantennenvorrichtung AV der Basisstation BS ist derart ausgebildet, dass sie bei entsprechender Ansteuerung durch das Steuermittel P den Empfangsbereich in mehr oder weniger als die in Figur 1 dargestellte Anzahl von drei Funkempfangsbereichen unterteilen kann. Auf diese Weise kann beispielsweise auch bei einer Anzahl von Teilnehmerstationen, die größer ist als beispielsweise neun Teilnehmerstationen erreicht werden, dass der zweite Grenzwert von beispielsweise drei Teilnehmerstationen in möglichst keinem Funkempfangsbereich überschritten wird. Eine derartige Ausgestaltung der Richtantennenvorrichtung AV ermöglicht eine große Flexibilität bei der Festlegung der räumlichen Ausdehnung und/oder der Anzahl von Funkempfangsbereichen

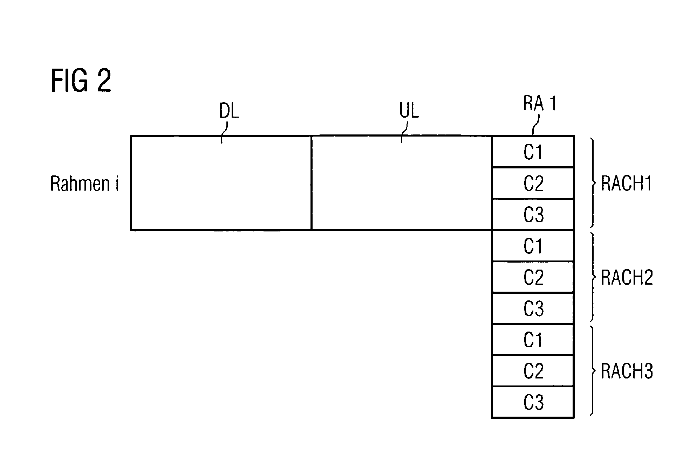

Figur 2 zeigt schematische ein weiteres Ausführungsbeispiel für einen Empfangszyklus auf einem Kanal für einen zufälligen Zugriff am Beispiel des ersten Übertragungsrahmens *Rahmen i.* In diesem alternativen Ausführungsbeispiel für einen Übertragungsrahmen werden jedoch während des ersten Empfangszyklus RA1 in den Funkempfangsbereichen A, B, C empfangbare Verbindungsaufbausignale nicht durch unterschiedliche Zeitschlitze getrennt, sondern es stehen in den Funkempfangsbereichen A, B, C, jeweils drei Codes C1, C2, C3 zur Verfügung. Dies bedeutet, dass in den Funkempfangsbereichen A, B, C jeweils drei Teilnehmerstationen gleichzeitig einen Verbindungsaufbauwunsch signalisieren können, ohne dass diese bei der Basisstation BS zu einer Kollision führen.

In den einzelnen Funkempfangsbereichen A, B, C werden in diesem Ausführungsbeispiel jeweils die gleichen drei Codes C1, C2, C3 verwendet. Selbstverständlich kann die Erfindung auch dann ausgeführt werden, wenn in den Funkempfangsbereichen A, B, C, zumindest teilweise unterschiedliche Codes und/oder zusätzlich zu den Codes C1, C2, C3 Zeitschlitze verwendet werden.

Die Erfindung kann selbstverständlich auch auf eine Gruppe von Funkempfangsbereichen mehrerer Basisstationen angewandt werden (nicht dargestellt). Dabei wird die Ausdehnung der Funkempfangsbereiche der Gruppe von Basisstationen vorzugsweise so angepasst, dass die Funkempfangsbereiche benachbarter Basisstationen auch nach einer jeweiligen Änderung aneinandergrenzen oder überlappen. Auf diese Weise kann eine lückenlose Versorgung der Teilnehmerstationen für eine Gruppe von Basisstationen mit ihren jeweiligen Funkempfangsbereichen gewährleistet werden. Ansonsten erfolgt die Änderung der Funkempfangsbereiche einer Gruppe von Basisstationen wie bereits zuvor anhand von Figuren 1 und 2 für die Basisstation BS beschrieben.

Nachfolgend wird ein weiteres nicht dargestelltes Ausführungsbeispiel beschrieben, das beispielhaft einen Algorithmus angibt, um die Ausdehnung von einer Anzahl von b, mit b einer natürlichen Zahl, Funkempfangsbereichen einer Funkstation in Abhängigkeit von einer Anzahl von Zufallszugriffen in den b Funkempfangsbereichen zu ändern.

In den b Funkempfangsbereichen wird jeweils für beispielsweise drei Empfangszyklen die Anzahl von Zufallszugriffen auf einem jeweiligen Zufallszugriffskanal ermittelt. Ein derartiger Mittelungsprozess dient der Stabilisierung der Festlegung der Ausdehnungen der Funkempfangsbereiche gegenüber statistischen Schwankungen der als Maß für eine Kollisionswahrscheinlichkeit verwendeten Größen und kann selbstverständlich auch bei den anhand von Figuren 1 und 2 beschriebenen Ausführungsbeispielen entsprechend angewandt werden.

Der Funkempfangsbereich mit der größten Anzahl $a_{max}$ von Zufallszugriffen wird um x Grad verringert und der Funkempfangsbereich mit der geringsten Anzahl amin von Zufallszugriffen wird um x Grad vergrößert.

```
Beispielsweise gilt x= ((a_max-a_min)/2a_max)*(360°/b).
```

Werden beispielsweise wie in Figur 1 drei Funkempfangsbereiche verwendet, ist b=3. Liegen im ersten Funkempfangsbereich A ein Zufallszugriff, im zweiten Funkempfangsbereich B drei Zufallszugriffe und im dritten Funkempfangsbereich C 5 Zufallszugriffe vor, so ergibt sich x = ((5-1))/10 * (360°/3)=48°. Der erste Funkempfangsbereich A wird daher um 48° vergrößert, während der dritte Funkempfangsbereich C um 48° vergrößert wird.

Die Anpassung der Funkempfangsbereiche wird nachfolgend kontinuierlich beispielsweise alle drei Empfangszyklen wiederholt. Selbstverständlich kann alternativ oder zusätzlich zur Anzahl der Zufallszugriffe auch ein anderes Maß für eine Kollisionswahrscheinlichkeit von Zufallszugriffen verwendet werden.

**Patentansprüche**

**1.** Verfahren zum Ändern einer räumlichen Ausdehnung wenigstens eines Funkempfangsbereichs (A, B, C) einer Funkstation (BS), wobei in dem wenigstens einen Funkempfangsbereich (A, B, C) auf einem Kanal (RACH1, RACH2, RACH3) per Zufallszugriff von Teilnehmerstationen (MS1, MS2, MS3, MS4, MS5, MS6, MS8, MS9) gesendete Daten empfangen werden,
**dadurch gekennzeichnet,**
**dass** die räumliche Ausdehnung des wenigstens einen Funkempfangsbereichs (A, B, C) in Abhängigkeit von wenigstens einem Maß für eine Kollisionswahrscheinlichkeit von auf dem Kanal (RACH1, RACH2, RACH3) erfolgenden Zufallszugriffen geändert wird.

**2.** Verfahren nach Anspruch 1,
**dadurch gekennzeichnet,**
**dass** die räumliche Ausdehnung des Funkempfangsbereichs (A) verringert wird, falls das Maß für eine Kollisionswahrscheinlichkeit einen ersten Grenzwert überschreitet.

**3.** Verfahren nach Anspruch 1 oder 2,
**dadurch gekennzeichnet,**
**dass** die räumliche Ausdehnung des Funkempfangsbereichs (B) vergrößert wird, falls das Maß für eine Kollisionswahrscheinlichkeit einen zweiten Grenzwert unterschreitet.

**4.** Verfahren nach einem der vorstehenden Ansprüche,
**dadurch gekennzeichnet,**
**dass** als Maß für eine Kollisionswahrscheinlichkeit die Anzahl sich in dem Funkempfangsbereich befindender Teilnehmerstationen oder die Anzahl sich in dem Funkempfangsbereich ohne aktive Verbindung befindender Teilnehmerstationen und/oder die Anzahl innerhalb des Zeitintervalls in dem Funkempfangsbereich empfangener Zufallszugriffe und/oder die Art und/oder eine Priorität eines per Zufallszugriff verwendeten oder angeforderten Dienstes verwendet wird.

**5.** Verfahren nach Anspruch 4,

**dadurch gekennzeichnet,**
**dass** von der Anzahl innerhalb des Zeitintervalls in dem Funkempfangsbereich empfangener Zufallszugriffe nur die Anzahl der Kollisionen von Zufallszugriffen berücksichtigt wird.

6. Verfahren nach einem der vorstehenden Ansprüche,
**dadurch gekennzeichnet,**
**dass** auf dem Kanal (RACH1, RACH2, RACH3) unterschiedliche Zeitlagen (TS1, TS2, TS3) und/oder unterschiedliche Codes (C1, C2, C3) zur Übertragung von Zufallszugriffen verwendet werden.

7. Verfahren nach einem der vorstehenden Ansprüche,
**dadurch gekennzeichnet,**
**dass** als Funkempfangsbereich (A, B, C) ein Empfangssektor einer Richtantennenvorrichtung (AV) der Funkstation (BS) verwendet wird.

8. Verfahren nach einem der vorstehenden Ansprüche,
**dadurch gekennzeichnet,**
**dass** in einer Gruppe von Funkempfangsbereichen (A, B, C) der Funkstation (BS) oder in einer Gruppe von Funkempfangsbereichen weiterer Funkstationen in jedem Funkempfangsbereich auf einem Kanal (RACH1, RACH2, RACH3) per Zufallszugriff von Teilnehmerstationen gesendete Daten empfangen werden und die räumliche Ausdehnung der Funkempfangsbereiche (A, B, C) in Abhängigkeit von einem jeweiligen Maß für eine Kollisionswahrscheinlichkeit von auf dem entsprechenden Kanal (RACH1, RACH2, RACH3) erfolgenden Zufallszugriffen geändert wird.

9. Verfahren nach Anspruch 8,
**dadurch gekennzeichnet,**
**dass** die räumlichen Ausdehnungen der Funkempfangsbereiche (A, B, C) derart geändert werden, dass eine für alle Funkempfangsbereiche (A, B, C) der Gruppe gemeinsam betrachtete Kollisionswahrscheinlichkeit von Zufallszugriffen verringert wird.

10. Verfahren nach Anspruch 8 oder 9,
**dadurch gekennzeichnet,**
**dass** die räumlichen Ausdehnungen der Funkempfangsbereiche (A, B, C) derart geändert werden, dass benachbarte Funkempfangsbereiche (A, B, C) direkt aneinandergrenzen oder überlappen.

11. Verfahren nach Anspruch 8, 9 oder 10,
**dadurch gekennzeichnet,**
**dass** in wenigstens zwei benachbarten Funkempfangsbereichen (A, B, C) gleiche Zeitlagen (TS1, TS2, TS3) und/ oder gleiche Codes (C1, C2, C3) für Zufallszugriffe verwendet werden.

12. Funkstation (BS)

- mit einer Antennenvorrichtung (AV) zum Empfangen von per Zufallszugriff auf einem Kanal (RACH1, RACH2, RACH3) von sich in wenigstens einem Funkempfangsbereich (A, B, C) der Antennenvorrichtung (AV) befindenden Teilnehmerstationen (MS1, MS2, MS3, MS4, MS5, MS6, MS8, MS9) gesendeten Daten,
- mit Steuermitteln (P) zum Ändern einer räumlichen Ausdehnung des wenigstens einen Funkempfangsbereichs (A, B, C),

**dadurch gekennzeichnet,**
**dass** die Steuermittel (P) ausgebildet sind, die räumliche Ausdehnung des wenigstens einen Funkempfangsbereichs (A, B, C) in Abhängigkeit von einem Maß für eine Kollisionswahrscheinlichkeit von auf dem Kanal (RACH1, RACH2, RACH3) erfolgenden Zufallszugriffen zu ändern.

# FIG 1

B (RACH2)

MS4 1
MS6

A (RACH1) 1'
MS1 MS3
2
MS2
3'
MS5 3
MS7
AV P
2'
BS
MS9 MS8
C (RACH3)

RA 1

Rahmen i
DL UL
RACH 1
RACH 2
RACH 3
TS1 TS2 TS3

RA 2

Rahmen i+1
DL UL
RACH 1
RACH 2
RACH 3
TS1 TS2 TS3

FIG 2

Rahmen i

DL UL RA 1

| | |
|---|---|
| C1 | ⎫ |
| C2 | ⎬ RACH1 |
| C3 | ⎭ |
| C1 | ⎫ |
| C2 | ⎬ RACH2 |
| C3 | ⎭ |
| C1 | ⎫ |
| C2 | ⎬ RACH3 |
| C3 | ⎭ |

**Europäisches**
**Patentamt**

## EUROPÄISCHER RECHERCHENBERICHT

Nummer der Anmeldung

EP 05 00 0847

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | WO 99/60659 A (RAYTHEON COMPANY) 25. November 1999 (1999-11-25) * Seite 6, Zeile 28 - Seite 10, Zeile 15 * * Seite 13, Zeile 1 - Zeile 28 * * Seite 15, Zeile 30 - Seite 17, Zeile 5 * * Seite 18, Zeile 1 - Seite 19, Zeile 18 * * Abbildungen 1a,1b,1c,2,6-8 * ----- | 1-12 | H04Q7/36 |
| Y | DE 199 50 858 A1 (SIEMENS AG) 10. Mai 2001 (2001-05-10) * Spalte 1, Zeile 36 - Spalte 2, Zeile 39 * * Spalte 4, Zeile 10 - Zeile 21 * * Spalte 5, Zeile 7 - Zeile 22 * * Abbildung 5 * ----- | 1-12 | |
| A | WO 02/062085 A (COMSAT CORPORATION) 8. August 2002 (2002-08-08) * Seite 1, Zeile 15 - Seite 2, Zeile 14 * * Seite 3, Zeile 7 - Zeile 23 * * Seite 9, Zeile 13 - Seite 10, Zeile 2 * * Seite 11, Zeile 12 - Zeile 24 * * Seite 13, Zeile 15 - Seite 14, Zeile 4 * * Abbildung 8 * ----- | 1-12 | |
| A | GB 2 350 024 A (* NEC CORPORATION) 15. November 2000 (2000-11-15) * Seite 2, Zeile 4 - Zeile 28 * * Seite 4, Zeile 23 - Seite 5, Zeile 12 * * Seite 8, Zeile 18 - Seite 9, Zeile 19 * * Seite 17, Zeile 1 - Seite 18, Zeile 2 * * Seite 19, Zeile 14 - Zeile 19 * * Abbildungen 4,10 * ----- -/-- | 1-12 | |

RECHERCHIERTE SACHGEBIETE (Int.Cl.7)

H04Q

Der vorliegende Recherchenbericht wurde für alle Patentansprüche erstellt

| Recherchenort | Abschlußdatum der Recherche | Prüfer |
|---|---|---|
| München | 17. Juni 2005 | Rosenauer, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................................
& : Mitglied der gleichen Patentfamilie, übereinstimmendes Dokument

EPO FORM 1503 03.82 (P04C03)

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 2003/119559 A1 (CHITRAPU PRABHAKAR R) 26. Juni 2003 (2003-06-26)<br>* Seite 1, Absatz 11 - Absatz 12 *<br>* Seite 2, Absatz 18 - Absatz 19 *<br>* Seite 7, Absatz 74 - Absatz 75 *<br>* Seite 7, Absatz 78 - Seite 8, Absatz 79 *<br>* Seite 10, Absatz 121 - Absatz 122 *<br>* Abbildungen 6,9,10 *<br>----- | 1-12 | |
| | | | **RECHERCHIERTE SACHGEBIETE (Int.Cl.7)** |

Der vorliegende Recherchenbericht wurde für alle Patentansprüche erstellt

| Recherchenort | Abschlußdatum der Recherche | Prüfer |
|---|---|---|
| München | 17. Juni 2005 | Rosenauer, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 05 00 0847

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-06-2005

| Im Recherchenbericht angeführtes Patentdokument | | Datum der Veröffentlichung | Mitglied(er) der Patentfamilie | | | Datum der Veröffentlichung |
|---|---|---|---|---|---|---|
| WO 9960659 | A | 25-11-1999 | AU | 4308899 | A | 06-12-1999 |
| | | | WO | 9960659 | A1 | 25-11-1999 |
| | | | US | 6236866 | B1 | 22-05-2001 |
| DE 19950858 | A1 | 10-05-2001 | KEINE | | | |
| WO 02062085 | A | 08-08-2002 | US | 2002118661 | A1 | 29-08-2002 |
| | | | CA | 2432766 | A1 | 08-08-2002 |
| | | | EP | 1344413 | A2 | 17-09-2003 |
| | | | WO | 02062085 | A2 | 08-08-2002 |
| GB 2350024 | A | 15-11-2000 | JP | 2803716 | B2 | 24-09-1998 |
| | | | JP | 9247085 | A | 19-09-1997 |
| | | | GB | 2350025 | A ,B | 15-11-2000 |
| | | | GB | 2350026 | A ,B | 15-11-2000 |
| | | | AU | 721201 | B2 | 29-06-2000 |
| | | | AU | 1518997 | A | 18-09-1997 |
| | | | GB | 2311191 | A ,B | 17-09-1997 |
| | | | US | 5898682 | A | 27-04-1999 |
| US 2003119559 | A1 | 26-06-2003 | AU | 2002362024 | A1 | 17-06-2003 |
| | | | BR | 0214623 | A | 23-11-2004 |
| | | | CA | 2468521 | A1 | 12-06-2003 |
| | | | CN | 2582301 | Y | 22-10-2003 |
| | | | CN | 2582303 | Y | 22-10-2003 |
| | | | CN | 2582302 | Y | 22-10-2003 |
| | | | DE | 20218406 | U1 | 27-03-2003 |
| | | | DE | 20218407 | U1 | 27-03-2003 |
| | | | DE | 20218408 | U1 | 27-03-2003 |
| | | | EP | 1449349 | A2 | 25-08-2004 |
| | | | TW | 595856 | Y | 21-06-2004 |
| | | | TW | 563993 | Y | 21-11-2003 |
| | | | TW | 595857 | Y | 21-06-2004 |
| | | | WO | 03049409 | A2 | 12-06-2003 |
| | | | US | 2003114195 | A1 | 19-06-2003 |
| | | | US | 2003114196 | A1 | 19-06-2003 |

EPO FORM P0461

Für nähere Einzelheiten zu diesem Anhang : siehe Amtsblatt des Europäischen Patentamts, Nr.12/82